# EUROPEAN PATENT SPECIFICATION

(11) **EP 0 568 761 B1**
(45) Date of publication and mention of the grant of the patent: **29.01.1997**
(21) Application number: 92830452.6
(22) Date of filing: 21.08.1992
(51) Int. Cl.: G11B 23/113, G11B 15/68

(54) **Tape cassette feed unit for automatic machines**
Bandkassettenzufuhreinheit für automatischen Vorrichtungen
Unité d'alimentation de cassettes à bande pour machines automatiques

(30) Priority: 08.05.1992 IT MI921098
(43) Date of publication of application: 10.11.1993
(73) Proprietor: TAPEMATIC S.p.A., I-20052 Monza (Milano) (IT)
(72) Inventor: Perego, Luciano, I-20050 Mezzago (MI) (IT)
(74) Representative: Righetti, Giuseppe

(56) References cited:
- EP-A- 0 288 165
- EP-A- 0 315 807
- EP-A- 0 407 305

## Description

The present invention pertains to a tape cassette feed unit for automatic machines, comprising: at least a linear feeder arranged to slidably guide a row of cassettes disposed consecutively in side by side relation against each other and oriented in alternating directions; advance means associated with the linear feeder for moving the cassette row towards one output end of the feeder; transferring means acting close to said ouput ends in order to pick up, at each operating cycle, one of the cassettes belonging to said row and put it in abutment by one of its faces on an output conveyor.

In the embodiment described, the feed unit is designed to be combined with automatic cassette loading machines. However the invention cart be also intended for machines adapted to carry out different operations, such as for example recording of musical pieces or a movie, on tapes already loaded into cassettes.

It is known that in industrial processes for producing audio or video tape cassettes, automatic machines carrying out the tape winding operation into individual cassettes are widely used. In these cases, above all when a high productivity is required, said loading machines are supplied with empty cassettes with the aid of a feed unit designed to lay down the individual cassettes on an output conveyor usually of the belt type, leading to said loading machines (see, for instance, EP-A-0 315 807).

In greater detail, a first type of known feed unit essentially comprises a linear feeder having an output end opening perpendicularly onto the output conveyor. An operator deposits one row of cassettes picked up from a tray previously used for packing purposes, onto the linear feeder. A belt carrier or other suitable transport means, moves the cassette row in such a manner that the cassettes are subjected to drop one after the other from the output end of the linear feeder and arrange themselves on the output conveyor. In addition, suitable control means activates and deactivates the belt carrier operation and consequently the cassette feed to the output conveyor, depending upon the amount of cassettes called for by the loading machines with which said output conveyor is associated.

While offering a satisfactory performance as regards the empty cassette feed to loading machines, feed units of the above type need an important use of manpower for picking up the individual cassette rows from the trays and subsequently dispose them onto the linear feeder. In the connection it is to be pointed out that the linear feeder, due to bulkiness problems, cannot simultaneously house more than two or three cassette rows. Taking into account the high production speed reached by loading machines, the amount of cassettes lying on the linear feeder is discharged onto the output conveyor within a very short lapse of time, which may even be shorter than one minute. The constant presence of one or more operators is therefore necessary in order to supply said linear feeder with cassettes.

In an attempt to solve this problem, feed units have been conceived in which the linear feeder substantially consists of a conveyor belt substantially extending in a vertical direction, along which a plurality of support and drive elements is distributed. Each of said support and drive elements lends itself to support one of the cassette rows deposited on the linear feeder in order to enable them to be raised towards the output end thereof, located at a higher position.

The vertically-oriented linear feeder is capable of engaging a greater number of cassette rows than the linear feeders extending horizontally, the operating bulkiness being the same in both of them.

However, at least an operator is always necessary, as he must pick up the cassette rows from the trays and put them onto the feeder.

Feeders have also been provided which comprise a turret rotating about a vertical axis and provided with a plurality of circumferentially distributed compartments, designed each to engage one or more cassette rows drawn from the tray. Suitable transferring means consisting for example of a pusher mechanism movable in a radial direction to the turret base, pick up the individual cassettes from one of the engagement compartments disposed in alignment with the output conveyor, so that the cassettes will be transferred to said conveyor.

When no more cassettes are present in the engagement compartment, an angular rotation of the turret is operated, so that the cassettes arranged in the adjacent engagement compartment will be submitted to the transferring means action.

This technical solution too involves an important use of manpower, in that the cassette rows must be individually picked up from the corresponding trays, and the turret cannot hold, at all events, a sufficiently high amount of cassettes to give the feed unit an appropriate operating self-containedness.

The object of the present invention is substantially to solve the above problems, by providing a feed unit capable of drastically reducing the need for human intervention when empty cassettes are to be supplied.

The foregoing and further objects that will become more apparent in the course of the present description, are substantially attained by a tape cassette feed unit for automatic machines, characterized in that it comprises: a storage station designed to engage a plurality of trays stacked one on top of the other and each carrying a plurality of cassette rows disposed parallelly in side by side relation; a slide track extending horizontally from the storage station base towards said linear feeder; pushing means for moving the individual trays along the slide track, from the storage station to the linear feeder; stop means for stopping the progress of the individual trays on the slide track when one of said cassette rows reaches a predetermined pick-up position; at least a transport arm operatively mounted above the slide track and linear feeder and operating between a grasp condition in which it picks up from the tray the cassette row arranged in the pick-up condition, to a deposit condition in which it deposits the same cassette row onto the linear feeder.

Further features and advantages of the invention will be better understood from the detailed description of a preferred embodiment of a tape cassette feed unit for automatic machines in accordance with the present invention, given hereinafter by way of non-limiting example with reference to the accompanying drawings, in which:
- Fig. 1 is a perspective view of a feed unit in accordance with the invention;
- Fig. 2 is a fragmentary perspective view of the feed unit, taken from the opposite side with respect to Fig. 1;
- Fig. 3 is a perspective view of an audio cassette.

Referring to the drawings, a tape cassette feed unit for automatic machines in accordance with the present invention has been generally identified by reference numeral 1.

In the embodiment described, the feed unit 1 is arranged to feed a plurality of empty tape cassettes 2 in a suitable manner to one or more automatic cassette loading machines, not shown as known per se and not of importance to the ends of the invention.

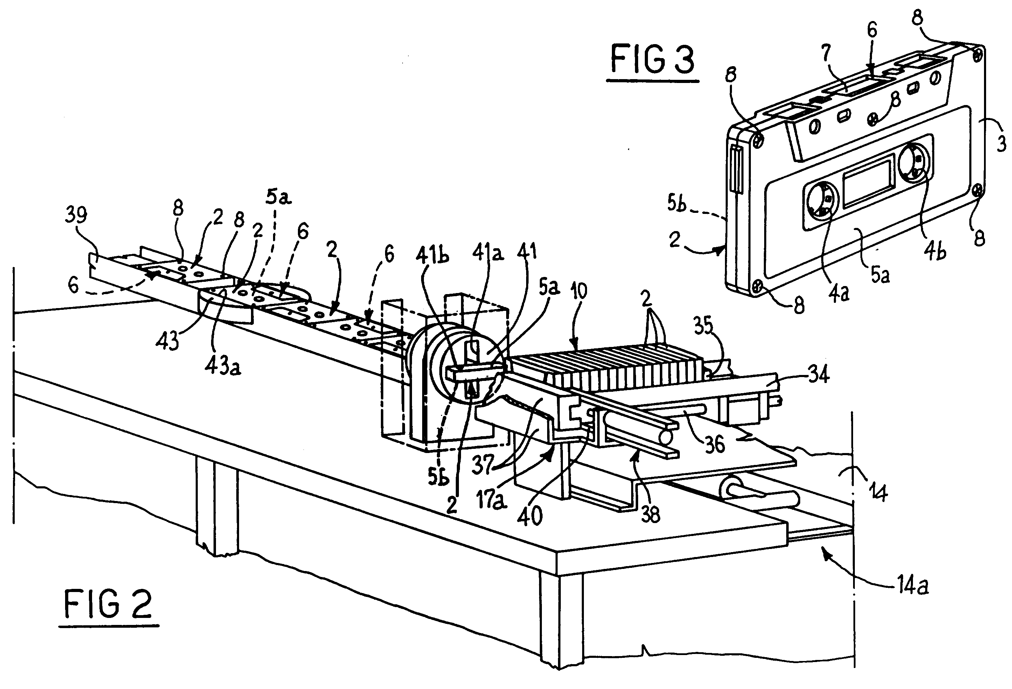

More particularly, in the embodiment described the feed unit 1 lends itself to operate on audio cassettes 2 of the type usually referred to as "Philips type". Referring particularly to Fig. 3, these audio cassettes each exhibit a casing 3 containing two winding hubs 4a, 4b accessible by means of through openings formed at the opposite faces 5a, 5b of the casing. An access opening 6 is also defined along one front side of the casing 3, through which opening a leader 7 is shown. The leader 7 is engaged to the winding hubs 4a, 4b at its opposite ends and is designed to be conventionally cut and spliced to a magnetic use tape during the loading process carried out by said loading machine. Each cassette 2 can also be provided with fastening screws 8 showing at one of the faces 5a, 5b and conventionally used for assembling the casing 3.

In an original manner, the cassettes 2 are located in respective trays 9 made of paperboard or other suitable material, conventionally used for their packaging and transport. In greater detail, cassettes 2 are placed in each tray 9 in several rows 9 disposed consecutively in side by side relation. In the embodiment described, the cassettes 2 forming each row 10 are disposed side by side with their faces 5a, 5b oriented in alternating directions arid exhibit the access openings 6 alternately oriented downwardly and upwardly. The fastening screws 8 of all cassettes 2 should be oriented according to a predetermined direction, but, due to inaccuracy during the packing step or for other reasons, some cassettes 2 could also exhibit their screws 8 turned in the opposite way.

The foregoing being stated, the feed unit 1 comprises a storage station 11 for housing a plurality of said trays 9 carrying rows 10 of cassettes 2. In greater detail, trays 9 are piled up manually one on top of the other so as to form a stack generally denoted by 12, slidably guided in a vertical direction between at least two holding walls 13. The tray 9 put at the base of the stack 12 rests on a horizontally disposed slide track 14 exhibiting a longitudinal extension at right angles to the cassette row extension. Preferably, the tray 9 reaching the slide track 14 is engaged by contact, by at least an aligner element 15 fastened to the slide track and exhibiting a vertically inclined lead-in surface 15a.

Said lead-in surface 15a lends itself to interact with a lower longitudinal edge of the tray 9 for guiding it against a locator element 15b operating on the opposite side with respect to the aligner element 15.

Pushing means 16 acts on the slide track 14 shifting the individual trays 9 along the slide track from the storage station 11 towards a linear feeder 17 extending transversely to the slide track in a slightly raised position relative to the trays 9 moving forward thereon.

To this end, the pushing means 16 comprises at least one pusher mechanism 18 projecting upwardly from the slide track 14 at one slot 19 formed lengthwise thereon. A control actuator 20 located under the slide track 14 acts on the first pusher mechanism 18 for moving it between a first and a second limit positions, at which positions said pusher mechanism is disposed immediately upstream and downstream respectively of the storage station 11, referring to the feed direction of trays 9. In other words, the maximum stroke of the first pusher mechanism 18 enables one of the trays 9 to be completely disengaged from the storage station 11.

Advantageously, combined with the storage station 11 is a plurality of auxiliary supporting elements 21, selectively movable between a rest position in which they are substantially retracted under the slide track 14, and an operating position in which they project vertically from the slide track for supporting the trays 9 disposed in stacked relationship on top of the tray resting on the slide track and submitted to the action of the first pusher mechanism 18. In greater detail, at least two pairs of these auxiliary supporting elements 21 are provided, which are mutually spaced apart in the longitudinal extension of the slide track 14 and individually movable from the rest position to the operating position upon command of respective fluid-actuated cylinders 22a, 22b. The sequential intervention of the auxiliary supporting elements 21 enables the trays 9 stacked upon each other on the tray submitted to the action of the first pusher mechanism 18, to be properly supported, when said pusher mechanism 18 is located at intermediate positions between the first and second limit positions. Only when the first pusher mechanism 8 has come back to the first limit position, the auxiliary supporting elements 21 will be lowered to the rest condition for the purpose of disposing a new tray 9 on the slide track 14.

Also operating on the slide track 14 is stop means 23 arranged to stop the progress of the individual trays 9 when one of the cassette rows 10 reaches a predetermined pick-up position that, in the embodiment shown, is located immediately upstream of the linear feeder 17. Preferably this stop means essentially comprises at least a horizontal abutment wall 23, extending transversely over the slide track 14 and arranged to offer an abutment seat for the cassette rows 10 contained in the tray 9 moving on the slide track 14.

Due to the presence of the wall 23, the displacement of the first pusher mechanism 18 from the first to the second limit positions takes place according to a sequence of movement steps in succession, each of which substantially corresponds to the width of a cassette row 10. Optional microswitches or other sensor means disposed close to the abutment wall 23 can control the deactivation of the control actuator 20 from the moment that one of the rows 10 touches the abutment wall to the moment that, as better viewed in the following, said row is picked up from the tray 9.

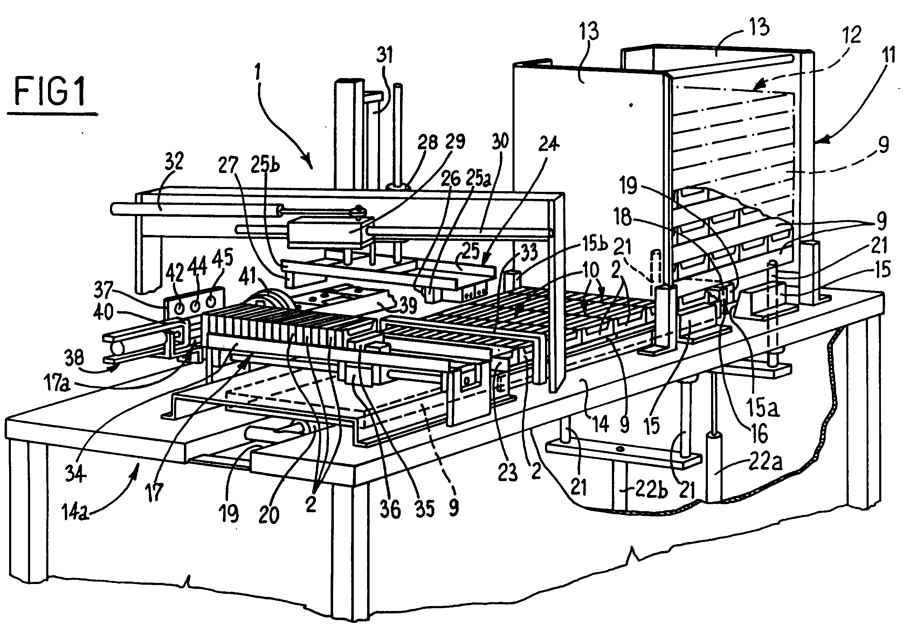

As can be seen from Fig. 1, the abutment wall 23 is spaced apart from the slide track 14 according to an extent greater than the tray height, so that it can act on the cassette rows 10 without interferring with the tray displacement. When all cassette rows 10 have been removed from tray 9, said tray, urged by net trays 9, will fall from a terminal end 14a of the slide track 14.

Extraction of the cassette rows 10 from trays 9 is carried out by means of a transport arm 24 operatively mounted above the slide track 14 and linear feeder 17. The transport arm 24 by moving in a path preferably oblique to the longitudinal extension of the slide track 14 and linear feeder 17, operates between a grasp condition in which it picks up from the corresponding tray 9 the cassette row 10 arranged in the pick-up condition, and a deposit condition in which it lays down the same cassette row 10 onto the linear feeder 17.

In particular, the transport arm 24 comprises a supporting plate 25 that, under operating conditions, extends over the cassette row 10 submitted to the action of the transport arm. The supporting plate 25 carries, at one end 25a thereof, one or more gripper elements 26 simultaneously movable between a work position in which they act on the cassette row 10 to hold it against a locator relief 27 fastened to a second end 25b of the supporting plate, and a rest condition in which they are spaced apart from the cassette row 10 so as to disengage it from the transport arm 24 when said arm is in the deposit condition.

For movement purposes between the grasp condition and the deposit condition, the transport arm 24 is guided through one or more vertical guides 28 integral with a carriage 29 horizontally movable along a guide bar 30 extending above the slide track 14 and linear feeder 17 obliquely to the longitudinal extension thereof. A first and a second fluid-actuated cylinders 31, 32 acting between the carriage 29 and arm 24 and the guide bar 30 arid carriage respectively, drive the transport arm 24 between the pick-up condition and deposit condition.

In greater detail, when the transport arm 24 reaches the pick-up condition, the gripper elements 26, initially at the rest position, are brought to the operating position in order to cause the engagement of the cassette row 10 located against the abutment wall 23. Then, the first fluid-actuated cylinder 31 lifts the transport arm 24, which brings about the extraction of the cassette row 10 from the tray 9. During this step, an auxiliary locator bar 33 extending horizontally above the cassette row 10 which is close to the row arranged in the pick-up position, prevents the cassettes 2 that must stay in the tray 9 from being dragged along by those carried by the arm 24.

Subsequently, the second fluid-actuated cylinder 32 brings the transport arm 24, and consequently the cassette row 10 picked up by said arm, above the linear feeder 17. When all cassettes 2 previously deposited on the linear feeder 17 are exhausted, the first fluid-actuated cylinder 31, driven by an activation sensor 45 through an electronic control box not shown, will lower the transport arm 24 to the deposit condition, so that the new cassette row 10 can be released on the feeder, due to the gripper elements 26 coming back to the rest position.

As can be viewed from the accompanying drawings, the linear feeder 17 has a guide structure 34 arranged to slidably engage, according to a direction at right angles to the longitudinal extension of the slide track 14, the cassette row 10 previously deposited by the transport arm 24. Advance means preferably consisting of at least a second pusher mechanism 35 movable along the guide structure 34 upon command of a respective actuator 36, causes the cassette row 10 to move towards an output end 17a of the feeder itself so that the cassette 2 placed ahead of the row is brought in abutment against a fixed locator 37. Operating at the output end 17a is transferring means 38 adapted to pick up, at each operating cycle, the cassette 2 acting on the fixed locator 37 for disposing it on an output conveyor 39 so that one of its opposite faces (5a, 5b) alternately rests thereon, said conveyor extending parallelly to the slide track 14 and ending at said loading machine.

The transferring means 38 preferably comprises at least a third pusher mechanism 40 horizontally movable between a rest position in which it is not in contact with the cassette 2 brought against the fixed locator 37, and an operating position in which said cassette is spaced apart sideways from the linear feeder 17. In greater detail, the cassette 2 submitted to the action of the third pusher mechanism 40 is engaged in a first rotating orientor 41 positioning it so that its faces 5a, 5b first disposed according to a vertical orientation, are oriented horizontally when the cassette is laid down on the output conveyor 39. To this end the first rotating orientor 41 has at least a first arid a second engagement housings 41a, 41b, mutually crossing at a right angle, each of which, when oriented vertically, is adapted to receive in engagement the cassette 2 submitted to the action of the third pusher mechanism 40. Upon command of a motor not shown, the first rotating orientor 41 is then submitted to an angular rotation through 90° about a horizontal axis, so that the cassette 2 previously engaged therein takes a horizontal arrangement. Thereafter the cassette 2 will be pushed out of the respective engagement housing 41a or 41b, when, due to a new operating cycle of the third pusher mechanism 40, a new cassette 2 is inserted in the other engagement housing 41b or 41a.

Preferably, the angular rotation of the first rotating orientor 41 is selectively controlled clockwise and counterclockwise by a first sensor 42 disposed close to the fixed locator 37 in order to identify the orientation of the fastening screws 8 provided in the cassette 2 in abutment on said locator. In particular, the first sensor 42, through said electronic control box, controls the rotation of the first rotating orientor 41 so that all cassettes 2 laid on the output conveyor 39 may have their fastening screws 8 oriented according to a predetermined direction, upwardly for example. For the purpose, with reference to the accompanying figures, when the first sensor 42 detects the presence of screws 8 on the face 5a of a cassette 2 in abutment against the fixed locator 37, it will cause the rotating orientor 41 to carry out an angular clockwise rotation with reference to Fig. 2, when said cassette 2 is inserted in the corresponding engagement housing 41a or 41b. When said cassettes 2 are oriented in the opposite way with respect to the foregoing description, the angular rotation of the first rotating orientor 41 will take place counterclockwise.

A second rotating orientor 43 can also be provided downstream of the first rotating orientor 41. The second orientor is provided with at least an engagement housing 43a for the individual cassettes 2 coming from the first orientor. The second orientor 43, disposed in coplanar relation with the first output conveyor 37, is rotatable about a vertical axis upon command of a second sensor 44, disposed on the fixed locator 37 as well, and arranged to identify, in a manner known per se and therefore not further described, the orientation of the access opening 6 of the cassette 2 coming in abutment on said locator. Based on data received from sensors 42, 44, the above control box will selectively cause the rotation through 180° of the second rotating orientor 43, if the orientation of opening 6 in the cassette 2 engaged therewith is in the opposite direction with respect to the desired one. In this way, all cassettes 2 lying on the output conveyor 39 will have the respective openings 6 turned towards a predetermined direction.

It will be recognized that when the cassettes 2 being processed are of the type devoid of the fastening screws, it will be sufficient to use the first orientor 41 for positioning the individual cassettes so that the respective openings 6 be faced toward the desired direction, based on data received from the second sensor 44.

After the above description, operation of the feed unit in question does not need further explanations.

The present invention attains the intended purposes.

The feed unit in question enables an important reduction in the manpower required for supplying cassettes to be sent to the automatic loading machines. It should be noted in fact that the only manual operation required, in accordance with the invention, is the introduction of the stacked trays into the loading station. This operation, further simplified by the fact that trays provided with cassettes are delivered already stacked at the packing stage, enables an important stock of empty cassettes to be arranged in the feed unit so that no human intervention is further needed for a long period of time. In the particular embodiment described, the storage station lends itself to house more than ten trays stacked one on top of the other, each containing about one hundred cassettes. Therefore, by a single manual operation it is possible to arrange more than one thousand cassettes ready for processing, in a very reduced space.

Obviously, modifications and variations may be made to the invention as conceived, all of them falling within the scope of the appendent claims.

## Claims

1. A tape cassette feed unit for automatic machines, comprising:
- at least a linear feeder (17) arranged to slidably guide a row (10) of cassettes (2) disposed consecutively in side by side relation against each other and the faces (5a, 5b) of which are oriented in alternating directions;
- advance means (35, 36) associated with the linear feeder (17) for moving the cassette row (10) towards one output end (17a) of the feeder;
- transferring means (38) acting close to said ouput end (17a) in order to pick up, at each operating cycle, one of the cassettes (2) belonging to said row (10) and put it in abutment by one of its faces (5a, 5b) on an output conveyor (39),
characterized in that it further comprises:
- a storage station (11) designed to engage a plurality of trays (9) stacked one on top of the other and each carrying a plurality of cassette rows (10) disposed parallelly in side by side relation;
- a slide track (14) extending horizontally from the storage station (11) base towards said linear feeder (17);
- pusher means (16) for moving the individual trays (9) along the slide track (14), from the storage station (11) to the linear feeder (17);
- stop means (23) for stopping the progress of the individual trays (9) on the slide track (14) when one of said cassette rows (10) reaches a predetermined pick-up positions;
- at least one transport arm (24) operatively mounted above the slide track (14) and linear feeder (17) and operating between a grasp position in which it picks up the cassette row (10) from the tray (9) to a deposit position in which it deposits the same cassette row (10) onto the linear feeder (17).

2. A unit according to claim 1, characterized in that said linear feeder (17) extends transversely to the slide track (14), in a raised position to the trays (9) moving on along the slide track itself.

3. A unit according to claim 1, characterized in that said transport arm (24) moves between the pick-up condition and the deposit condition in an oblique path with respect to the longitudinal extension of the slide track (14) and linear feeder (17).

4. A unit according to claim 1, characterized in that said transport arm (24) comprises a supporting plate (25) extending over said cassette row (10) and carrying, at one end (25a) thereof, at least a gripper element (26) movable between a work position in which it acts on the cassette row (10) to hold it against a locator relief (27) fastened to the second end (25b) of the supporting plate, and a rest condition in which it is spaced apart from the cassette row (10) so as to disengage it front the transport arm (24).

5. A unit according to claim 1, characterized in that said transport arm (24) is guided through at least a vertical guide (28) fixedly carried by a carriage (29) horizontally movable along a guide bar (30) extending above the slide track (14) and linear feeder (17).

6. A unit according to claim 5, characterized in that said guide bar (30) extends horizontally in an oblique direction to the longitudinal extension of the slide track (14) and linear feeder (17).

7. A unit according to claim 1, characterized in that combined with said storage station (11) is a plurality of auxiliary supporting elements (21) selectively movable between a rest position in which they are substantially rectracted under the slide track (14), and an operating position in which they project vertically from the slide track for supporting the trays (9) disposed in stacked relationship on top of the tray (9) resting on the slide track and submitted to the action of the pusher means (16).

8. A unit according to claim 7, characterized in that at least two pairs of said auxiliary supporting elements (21) are provided, which elements are mutually spaced apart in the longitudinal extension of the slide track (14) and individually movable from the rest position to the operating position.

9. A unit according to claim 1, characterized in that associated with said storage station (11) is at least an aligner element (15) fastented to the slide track (14) and exhibiting a vertically inclined lead-in surface (15a), arranged to interact with a longitudinal lower edge of one of said trays (9) in order to guide it against a locator element (15b) operating on the opposite side with respect to said aligner element (15), when the tray comes in abutment on the slide track (14).

10. A unit according to claim 1, characterized in that said pusher means (16) comprises at least one pusher mechanism (18) projecting upwardly from the slide track (14) and guided along one slot (19) formed lengthwise in the slide track; arid a control actuator (20) located under the slide track (14) arid acting on the first pusher mechanism (18) for moving it from a first and a second limit positions in which, with reference to the feed direction of trays (9), it is disposed immediately upstream and downstream respectively of said storage station (11).

11. A unit according to claim 11, characterized in that said stop means comprises at least a horizontal abutment wall (23) extending transversely above the slide track (14) and arranged to offer an abutment seat for the cassette rows (10) contained in the tray (9) moved by the pusher means (16).

12. A unit according to claim 1, characterized in that it further comprises an auxiliary locator bar (33) extending horizontally above the cassette row (10) which is close to the row (10) arranged in the pick-up position.

13. A unit according to claim 1, characterized in that said linear feeder (17) comprises: a guide structure (34) arranged to slidably engage the cassette row (10) according to the longitudinal extension thereof; and at least a second pusher mechanism (35) movable along the guide structure (34) for urging the cassettes (2) towards said output end (17a).

14. A unit according to claim 1, characterized in that said transferring means (38) comprises: a fixed locator (37) disposed at said output end (17a) and arranged to offer an abutment seat for one of said cassettes (2) located on the linear feeder (17); a third pusher mechanism (40) horizontally movable between a rest position in which it is not in contact with the cassette (2) brought against the fixed locator (37), and an operating position in which said cassette (2) is spaced apart sideways from the linear feeder (17); and at least one rotating orientor (41) exhibiting at least a pair of engagement housings (41a, 41b) mutually crossing at a right angle, which are adapted to receive the cassette (2) moved by the third pusher mechanism (40), said first rotating orientor (41) being rotatable about a horizontal axis, parallel to the shifting direction of said cassette (2), for orienting said cassette so that its faces (5a, 5b) are disposed in the horizontal direction.

15. A unit according to claim 14, characterized in that said first rotating orientor (41) can be rotated angularly, clockwise and counterclockwise selectively, upon command of at least one sensor (42) arranged to identify the orientation of fastening screws (8) shown by the cassette (2) in abutment on the fixed locator (37).

16. A unit according to claim 15, characterized in that it further comprises a second rotating orientor (43) located downstream of the first rotating orientor (41) and exhibiting at least an engagement housing (43a) for the individual cassettes (2) coming from the first rotating orientor, said second orientor (43) being rotatable about a vertical axis, upon command of at least a second sensor (44) arranged to identify the orientation of an access opening (6) of the cassette (2) coming in abutment on said fixed locator (37).

17. A unit according to claim 14, characterized in that the first rotating orientor (41) can be selectively rotated clockwise arid counterclockwise upon command of at least a second sensor (44) designed to identify the orientation of an opening access (6) exhibited by each cassette (2).

## Patentansprüche

1. Bandkassettenzuführeinheit für automatische Vorrichtungen, umfassend:
- mindestens eine lineare Zuführvorrichtung (17), die gleitbar eine Reihe (10) von nacheinander aneinanderliegenden Kassetten (2) führt, deren Seitenflächen (5a, 5b) in entgegengesetzten Richtungen gerichtet sind;
- Vorschubmittel (35, 36), die der linearen Zuführrichtung (17) zugeordnet sind, um die Reihe von Kassetten (10) in Richtung eines Austrittsendes (17a) der Zuführrichtung zu verstellen;
- Übergabemittel (38), die am Austrittsende (17a) wirken, um bei jedem Arbeitsschritt eine der, der Reihe (10) zugehörenden Kassetten (2) zu ergreifen und sie mit einer ihrer Seitenflächen (5a, 5b) auf einem Austrittsförderer (39) aufliegend anzuordnen,
dadurch gekennzeichnet, daß sie überdies umfaßt:
- eine Speicherstation (11), die eine Vielzahl von aufeinandergestapelten Aufnahmen (9) ergreift, die jeweils eine Vielzahl von Reihen von parallel zueinander anliegenden Kassetten (10) tragen;
- eine Gleitebene (14), die sich horizontal von der Basis der Speicherstation (11) in Richtung der linearen Zuführvorrichtung (17) erstreckt;
- Schubmittel (16), um die einzelnen Aufnahmen (9) längs der Gleitebene (14) von der Speicherstation (11) in Richtung der linearen Zuführvorrichtung (17) zu verstellen;
- Arretiermittel (23), um den Vorschub der einzelnen Aufnahmen (9) auf der Gleitebene (14) zu arretieren, sobald eine der Kassettenreihen (10) eine vorgegebene Entnahmestellung erreicht;
- mindestens einen Förderarm (24), der oberhalb der Gleitebene (14) und der linearen Zuführrichtung (17) wirksam angebracht und zwischen einer Greifstellung, in der er die Kassettenreihe (10) aus der Aufnahme ergreift und einer Ablagestellung wirksam ist, in der er dieselbe Kassettenreihe (10) auf der linearen Zuführvorrichtung ablegt.

2. Einheit nach Anspruch 1, dadurch gekennzeichnet, daß die lineare Zuführrichtung (17) sich quer zur Gleitebene (14) in einer gegenüber den Aufnahmen (9) erhobenen Stellung erstreckt, die längs der Gleitebene selbst vorrücken.

3. Einheit nach Anspruch 1, dadurch gekennzeichnet, daß der Förderarm (24) zwischen der Greifstellung und der Ablagestellung gemäß einer gegenüber der Längsabwicklung geneigten Laufbahn der Gleitebene (14) und der linearen Zuführrichtung (17) verstellt wird.

4. Einheit nach Anspruch 1, dadurch gekennzeichnet, daß der Förderarm (24) eine Trägerplatte (25) umfaßt, die sich oberhalb der Kassettenreihe (10) erstreckt und an einem ihrer Enden (25a) mindestens ein Greifelement (26) trägt, das zwischen einer Arbeitsstellung, in der es auf die Kassettenreihe (10) wirkt, um sie gegen einen am zweiten Ende (25b) der Trägerplatte befestigten Vorsprung zu halten, und einer Ruhestellung beweglich ist, in der es von der Kassettenreihe (10) beabstandet ist, um sie vom Förderarm (24) zu befreien.

5. Einheit nach Anspruch 1, dadurch gekennzeichnet, daß der Förderarm (24) über mindestens eine vertikale Führung (28) geführt ist, die starr von einem Wagen (29) getragen wird, der horiziontal längs einer Führungsstange (30) verstellbar ist, die sich oberhalb der Gleitebene (40) und der linearen Zuführvorrichtung (17) erstreckt.

6. Einheit nach Anspruch 5, dadurch gekennzeichnet, daß die Führungsstange (30) sich horiziontal gemäß einer gegenüber der Längsabwicklung geneigten Richtung der Gleitebene (14) und der linearen Zuführvorrichtung (17) erstreckt.

7. Einheit nach Anspruch 1, dadurch gekennzeichnet, daß der Speicherstation (11) eine Vielzahl von Hilfsstützelementen (21) zugeordnet ist, die wahlweise zwischen einer Ruhestellung, in der sie unterhalb der Gleitebene (14) im wesentlichen zurückgezogen sind, und einer Arbeitsstellung beweglich sind, in der sie vertikal von der Gleitebene vorspringen, um die gestapelten Aufnahmen (9) oberhalb der Schale (9) abzustützen, die auf der Gleitebene selbst aufliegend angeordnet ist und der Wirkung der Schubelemente (16) unterliegt.

8. Einheit nach Anspruch 7, dadurch gekennzeichnet, daß mindestens zwei Paare der Hilfsstützelemente (21) vorgesehen sind, wobei diese Hilfsstützelemente zueinander gemäß einer Längsabwicklung der Gleitebene (14) beabstandet sind und jeweils von der Ruhestellung in die Arbeitsstellung verstellbar sind.

9. Einheit nach Anspruch 1, dadurch gekennzeichnet, daß der Speicherstation (11) mindestens ein Ausrichtelement (15) zugeordnet ist, das an der Gleitebene (14) befestigt ist und eine vertikal geneigte Auflauffläche (15a) aufweist, die mit einer unteren Längskante einer der Aufnahmen (9) zusammenwirkt, um sie gegen ein Anschlagelement (15b) zu führen, das an dem Ausrichtelement (15) abgewandten Seite wirkt, sobald die Aufnahme selbst auf der Gleitfläche (14) aufliegend zu liegen kommt.

10. Einheit nach Anspruch 1, dadurch gekennzeichnet, daß die Schubmittel (16) mindestens ein erstes Schubgetriebe (18), das von der Gleitebene (14) nach oben ragt und längs eines Schlitzes (14) geführt ist, der in Längsrichtung in der Gleitebene selbst ausgenommen ist; und einen Steuerzylinder (20) umfassen, der unterhalb der Gleitebene (14) angeordnet ist und auf das erste Schubgetriebe 18 wirkt, um es von einer ersten in eine zweite Endanschlagstellung zu versetzen, in der, mit Bezug auf die Vorschubrichtung der Aufnahmen (9), es jeweils unmittelbar vor und jeweils nach der Speicherstation (11) angeordnet ist.

11. Einheit nach Anspruch 1, dadurch gekennzeichnet, daß die Arretiermittel mindestens eine horiziontale Anschlagwand (23) umfassen, die sich in Querrichtung oberhalb der Gleitebene (14) erstreckt und dazu bereitgestellt ist, einen Anschlagsitz für die Kassettenreihen (10) darzubieten, die in der durch die Schubmittel (16) verschobene Aufnahme (9) enthalten sind.

12. Einheit nach Anspruch 1, dadurch gekennzeichnet, daß sie überdies eine Hilfsanschlagstange (33) umfaßt, die sich horiziontal oberhalb der Kassettenreihe (10) erstreckt, die sich anliegend zur Reihe (10) befindet, die in der Entnahmestellung angeordnet ist.

13. Einheit nach Anspruch 1, dadurch gekennzeichnet, daß die lineare Zuführrichtung (17) umfaßt: eine Führungskonstruktion (34), die die Kassettenreihe (10) längs der Längsabwicklung dieser letzteren ergreift; und mindestens ein zweites Schubgetriebe (35), das längs der Führungskonstruktion (34) beweglich ist, um die Kassetten (2) in Richtung des Austrittsendes (17a) zu schieben.

14. Einheit nach Anspruch 1, dadurch gekennzeichnet, daß die Übergabemittel (38) umfassen: einen festliegenden Anschlag (37), der im Bereich des Austrittsendes (17a) angeordnet und dazu bestimmt ist, einen Anschlagsitz für eine der Kassetten (2) anzubieten, die auf der linearen Zuführvorrichtung (17) angeordnet sind; ein drittes Schubgetriebe (14), das horiziontal zwischen einer Ruhestellung, in der es sich mit der gegen den festliegenden Anschlag (37) gebrachten Kassette (2) nicht in Berührung befindet, und einer Arbeitsstellung beweglich ist, in der die Kassette (2) seitlich von der linearen Zuführvorrichtung (17) beabstandet ist; und mindestens einen ersten Drehausrichter (41), der mindestens ein Paar von zueinander senkrecht überkreuzten Eingriffssitzen (41a, 41b) aufweist, die dazu bestimmt sind, die vom dritten Schubgetriebe (40) verstellte Kassette (2) aufzunehmen, wobei der erste Drehausrichter (41) um eine horiziontale Achse parallel zu Verstellrichtung der Kassette (2) drehbar ist, um diese Kassette derart auszurichten, daß ihre Seitenflächen (5a, 5b) in horizontaler Richtung angeordnet sind.

15. Einheit nach Anspruch 14, dadurch gekennzeichnet, daß der drehbare Ausrichter (41) durch mindestens einen ersten Sensor (42) wahlweise in Uhrzeiger- und Gegenuhrzeigersinn winkelmäßig verschwenkt werden kann, der dazu fähig ist, die Ausrichtung von Schließschrauben (8) festzustellen, die die am festliegenden Anschlag (37) anliegende Kassette aufweist.

16. Einheit nach Anspruch 15, dadurch gekennzeichnet, daß sie überdies einen zweiten, drehbaren Ausrichter (43) umfaßt, der nach dem ersten drehbaren Ausrichter (41) angeordnet ist, und mindestens einen Eingriffsitz (43a) für die einzelnen Kassetten (2) aufweist, die vom ersten drehbaren Ausrichter kommen, wobei der zweite Ausrichter (43) um eine vertikale Achse aufgrund der Steuerung mindestens eines zweiten Sensors (44) drehbar ist, der die Ausrichtung einer Zutrittsöffnung (6) der Kassette (2) erfaßt, die auf dem festliegenden Anschlag (37) in Anlage kommt.

17. Einheit nach Anspruch 14, dadurch gekennzeichnet, daß der erste drehbare Ausrichter (41) wahlweise in Uhrzeiger- und Gegenuhrzeigersinn aufgrund der Steuerung mindestens eines zweiten Sensors (44) verschwenkt werden kann, der die Ausrichtung einer Zutrittsöffnung (6) erfaßt, die jede Kassette (2) aufweist.

## Revendications

1. Unité d'alimentation de cassettes à bande pour machines automatiques, comprenant:
- au moins un alimentateur linéaire (17) destiné à guider de manière coulissante une rangée (10) de cassettes (2) disposées consécutivement les unes à côté des autres et dont les faces (5a, 5b) sont orientées selon des directions opposées;
- des moyens d'avance (35, 36) associés à l'alimentateur linéaire (17) pour déplacer la rangée de cassettes (10) vers une extrémité de sortie (17a) de l'alimentateur;
- des moyens de transfert (38) agissant en correspondance de ladite extrémité de sortie (17a) pour saisir, pendant chaque cycle de travail, l'une des cassettes (2) appartenant à ladite rangée (10) et la disposer en appui, par l'une de ses faces (5a, 5b), sur un convoyeur de sortie (39),
caractérisée en ce qu'elle comporte en outre:
- un poste de ramassage (22) destiné à engager une pluralité de plateaux (9) empilés les uns sur les autres, et chacun portant une pluralité de rangées de cassettes (10) disposées parallèlement côte à côte;
- une table de glissement (14) s'étendant horizontalement depuis la base du poste de ramassage (11) jusqu'au dit alimentateur linéaire (17);
- des moyens de poussée (16) pour déplacer les plateaux individuels (9) le long de la table de glissement (14), depuis le poste de ramassage (11) jusqu'à l'alimentateur linéaire (17);
- des moyens d'arrêt (23) pour arrêter l'avance des plateaux individuels (9) sur la table de glissement (14) quand l'une desdites rangées de cassettes (10) atteint une position de prise préétablie;
- au moins un bras de transport (24) monté de manière opératoire au-dessus de la table de glissement (14) et de l'alimentateur linéaire (17) et agissant entre une position de prise dans laquelle il enlève la rangée de cassettes (10) du plateau et une position de dépôt dans laquelle il dépose la même rangée de cassettes (10) sur l'alimentateur linéaire.

2. Unité selon la revendication 1, caractérisée en ce que ledit alimentateur linéaire (17) s'étend transversalement à la table de glissement (14), en position surélevée par rapport aux plateaux (9) qui se déplacent en avant le long de la table de glissement.

3. Unité selon la revendication 1, caractérisée en ce que ledit bras de transport (24) se déplace entre une position de prise et la position de dépot selon une trajectoire oblique par rapport à l'extension longitudinale de la table de glissement (14) et de l'alimentateur linéaire (17).

4. Unité selon la revendication 1, caractérisée en ce que ledit bras de transport (24) comporte une plaque de support (25) s'étendant au-dessus de ladite rangée de cassettes (10) et portant, à l'une de ses extrémités (25a), au moins un élément de prise (26) mobile entre une position de travail dans laquelle il agit sur la rangée de cassettes (10) pour la maintenir contre un ressaut de butée (27) fixé à la deuxième extrémité (25b) de la plaque de support, et une condition de repos dans laquelle il est espacé de la rangée de cassettes (10) de manière à obtenir le dégagement de ladite rangée du bras de transport (24).

5. Unité selon la revendication 1, caractérisée en ce que ledit bras de transport (24) est guidé à travers au moins un guidage vertical (28) porté rigidement par un chariot (29) susceptible de déplacement horizontal le long d'une barre de guidage (30) s'étendant au-dessus de la tablée de glissement (14) et de l'alimentateur linéaire (17).

6. Unité selon la revendication 5, caractérisée en ce que ladite barre de guidage (30) s'étend horizontalement selon une direction oblique par rapport à l'extension longitudinale de la table de glissement (14) et de l'alimentateur linéaire (17).

7. Unité selon la revendication 1, caractérisée en ce qu'une pluralité d'éléments de support auxiliaires (21) sont associés audit poste de ramassage (11), ces éléments étant mobiles sélectivement entre une position de repos dans laquelle ils sont sensiblement escamotés au-dessous de la table de glissement (14) et une position de travail dans laquelle ils font saillies verticalement de la table de glissement pour supporter les plateaux (9) empilés au-dessus du plateau (9) disposé à l'appui sur la table de glissement et soumis à l'action des moyens de poussée (16).

8. Unité selon la revendication 7, caractérisée en ce qu'on prévoit au moins deux paires desdits éléments de support auxiliaires (21), lesdits éléments étant réciproquement espacés dans l'extension longitudinale de la table de glissement (14) et pouvant être individuellement déplacés de la position de repos à la position de travail.

9. Unité selon la revendication 1, caractérisée en ce qu'au moins un élément d'alignement (15) est associé audit poste de ramassage, cet élément d'alignement étant fixé à la table de glissement (14) et présentant une surface de départ inclinée verticalement (15a), agencée de manière à interagir avec un bord longitudinal inférieur de l'un desdits plateaux (9) pour le guider contre un élément de butée (15b) opérant du côté opposé par rapport audit élément d'alignement (15), quand le plateau est disposé à l'appui sur la table de glissement (14).

10. Unité selon la revendication 1, caractérisée en ce que lesdits moyens de poussée (16) comportent au moins un premier poussoir (18) faisant saillie vers le haut depuis la table de glissement (14) et guidé le long d'une fente (19) formée longitudinalement dans ladite table de glissement; et un actionneur de commande (20) disposé au-dessous de la table de glissement (14) et agissant sur le premier poussoir (18) pour le déplacer d'une première à une deuxième position de fin de course où, en se référant au sens d'avance des plateaux (9), il est disposé immédiatement en amont et respectivement immédiatement en aval dudit poste de ramassage (11).

11. Unité selon la revendication 11, caractérisée en ce que lesdits moyens d'arrêt comportent au moins une paroi de butée horizontale (23), s'étendant transversalement au-dessus de la table de glissement (14) et destinée à fournir un siège de butée aux rangées de cassettes (10) contenues dans le plateau (9) mû par les moyens de poussée (16).

12. Unité selon la revendication 1, caractérisée en ce qu'elle comporte en outre une barre de butée auxiliaire (33) s'étendant horizontalement au-dessus de la rangée de cassettes (10) qui se trouve proche de la rangée (10) disposée à la position de prise.

13. Unité selon la revendication 1, caractérisée en ce que ledit alimentateur linéaire (17) comporte: une structure de guidage (34) convenablement arrangée pour engager la rangée de cassettes (10) de manière coulissante selon l'extension longitudinale de cette dernière; et au moins un deuxième poussoir (35) mobile le long de la structure de guidage (34) en vue de pousser les cassettes (2) vers ladite extrémité de sortie (17a).

14. Unité selon la revendication 1, caractérisée en ce que lesdits moyens de transfert (38) comportent: une butée fixe (37) disposée à ladite extrémité de sortie (17a) et destinée à fournir un siège de butée pour l'une desdites cassettes (2) situées sur l'alimentateur linéaire (17); un troisième poussoir (40) mobile horizontalement entre une position de repos dans laquelle il n'est pas en contact avec la cassette (2) conduite contre la butée fixe (37), et une position de travail dans laquelle ladite cassette (2) est espacée latéralement de l'alimentateur linéaire (17); et au moins un premier dispositif rotatif d'orientation (41) présentant au moins une paire de sièges d'engagement (41a, 41b) réciproquement croisés perpendiculairement, lesquels sont adaptés à recevoir la cassette (2) mue par le troisième poussoir (40), ledit premier dispositif rotatif d'orientation (41) tournant autour d'un axe horizontal parallèle à la direction de déplacement de ladite cassette (2) pour orienter ladite cassette de telle sorte que ses faces (5a, 5b) soient disposées en direction horizontale.

15. Unité selon la revendication 14, caractérisée en ce que ledit dispositif rotatif d'orientation (41) peut être tourné de manière angulaire, sélectivement dans le sens des aiguilles d'une montre ou dans le sens inverse, sur commande d'au moins un premier capteur (42) adapté à détecter l'orientation de vis de fermeture (8) présentées par la cassette (2) à l'appui sur la butée fixe (37).

16. Unité selon la revendication 15, caractérisée en ce qu'elle comporte en outre un deuxième dispositif rotatif d'orientation (43) disposé à l'aval du premier dispostif rotatif d'orientation (41) et présentant au moins un siège d'engagement (43a) des cassettes individuelles (2) en provenance du premier dispositif rotatif d'orientation, ledit deuxième dispositif d'orientation (43) tournant autour d'un axe vertical, sur commande d'au moins un deuxième capteur (44) adapté à identifier l'orientation d'une ouverture d'accès (6) de la cassette (2) venant à l'appui sur ladite butée fixe (37).

17. Unité selon la revendication 14, caractérisée en ce que le premier dispositif rotatif d'orientation (41) peut être tourné sélectivement dans le sens des aiguilles d'une montre et dans le sens inverse, sur commande d'au moins un deuxième capteur (44) adapté à identifier l'orientation d'une ouverture d'accès (6) présentée par chacune des cassettes (2).
